# EUROPEAN PATENT APPLICATION

(11) **EP 1 921 781 A2**
(43) Date of publication of application: **14.05.2008**
(21) Application number: 07021226.1
(22) Date of filing: 30.10.2007
(51) Int. Cl.: H04H 60/59, H04H 60/48, H04H 60/64

(54) **Broadcast receiver capable of enlarging broadcast-related information on screen and method of controlling the broadcast receiver**

(30) Priority: 07.11.2006 KR 20060109571
(71) Applicant: LG Electronics Inc., Yongdungpo-gu Seoul 150-010 (KR)
(72) Inventor: Kim, Mi sun, Seoul 157-280 (KR); Han, Song Yi, Seoul 136-075 (KR)
(74) Representative: Katérle, Axel

(57) **Abstract**

A method of controlling a broadcast receiver and which includes displaying a broadcast program on a screen of the broadcast receiver, determining if a broadcast-related information enlargement mode is selected, and enlarging the broadcast-related information on the screen of the broadcast receiver when the determining step determines the broadcast-related information enlargement mode is selected.

## Description

This application claims priority to Korean Patent Application No. 10-2006-0109571, filed on November 7, 2006 in the Korean Intellectual Property Office, the disclosure of which is incorporated herein by reference in its entirety.

### BACKGROUND OF THE INVENTION

### 1. Field of the Invention

The present invention relates to a broadcast receiver and corresponding method that enlarges broadcast-related information displayed on a screen during the reproduction of a broadcast program.

### 2. Description of the Related Art

Portable terminals now are able to receive dif ferent broadcast programs. For example, users can now watch sporting events, television programs, news programs, music programs and other digitally broadcast programs using their mobile terminals as broadcast receivers.

One type of broadcasting system is the Digital multimedia broadcasting (DMB) system that involves digital video and audio broadcasting techniques such that the user can a watch broadcast programs even when moving from one place to another. In addition, the DMB system is classified into a terrestrial-DMB (T-DMB) system and a satellite-DMB (S-DMB) system. Examples of DMB broadcast receivers capable of receiving and reproducing DMB programs include DMB phones integrated with mobile phones, personal portable devices with no communication function, and set-top boxes for vehicles.

However, because broadcast receivers are generally portable devices, the screen size of the display unit is small. Thus, it is sometimes difficult for the user to view certain information displayed on the screen.

### SUMMARY OF THE INVENTION

Accordingly, one obj ect of the present invention is to address the above-noted and other problems.

Another object of the present invention is to enlarge broadcast related information on a broadcast receiver such that a user can better see the broadcast-related information on the screen of the broadcast receiver.

To achieve these and other advantages and in accordance with the purpose of the present invention, as embodied and broadly described herein, the present invention provides in one aspect a method of controlling a broadcast receiver. The method includes displaying a broadcast program on a screen of the broadcast receiver, determining if a broadcast-related information enlargement mode is selected, and enlarging the broadcast-related information on the screen of the broadcast receiver when the determining step determines the broadcast-related information enlargement mode is selected.

In another aspect, the present invention provides a broadcast receiving terminal including a broadcast receiving unit configured to receive a broadcast program, a displayunit configured to display the broadcast program, and a control unit configured to determine if a broadcast-related information enlargement mode is selected, and to control the display unit to enlarge the broadcast-related information displayed on the display unit when the broadcast-related information enlargement mode is selected.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
FIG. 1 is a block diagram of a broadcast receiver according to an embodiment of the present invention;
FIG. 2 is a flowchart illustrating a method of controlling a broadcast receiver according to an embodiment of the present invention;
FIG. 3 is a flowchart illustrating in more detail a method of searching for broadcast-related information on a screen of a broadcast receiver according to another embodiment of the present invention;
FIGS. 4Aand4Bare screen shots of amobile terminal displaying an enlarged broadcast related information according to an embodiment of the present invention; and
FIG. 5 is a flowchart illustrating a method of controlling a broadcast receiver according to another embodiment of the present invention.

### DETAILED DESCRIPTION OF THE INVENTION

The present invention advantageously enlarges broadcast-related information on a screen of a broadcast receiver such that the user can easily see this information. For example, when the user watches a sports program on their broadcast receiver, the broadcast-related information such as the score of the game, how much time is left in the game (or how much time has already passed in the game) and other information such as player statistics, etc. is displayed in a certain area on the screen of the broadcast receiver. Likewise, when the user watches a home shopping program on their broadcast receiver, broadcast-related information such as product information, a price of the product, a phone number or website to use in purchasing the product, etc. is displayed in a certain area on the screen of the broadcast receiver.

However, because the screen of the broadcast receiver is small, the user has difficultly in viewing much of the broadcast-related information. The present invention advantageously solves this problem by enlarging the broadcast-related information such that the user can easily see the broadcast-related information. Different embodiments of the present invention will now be described with respect to the figures.

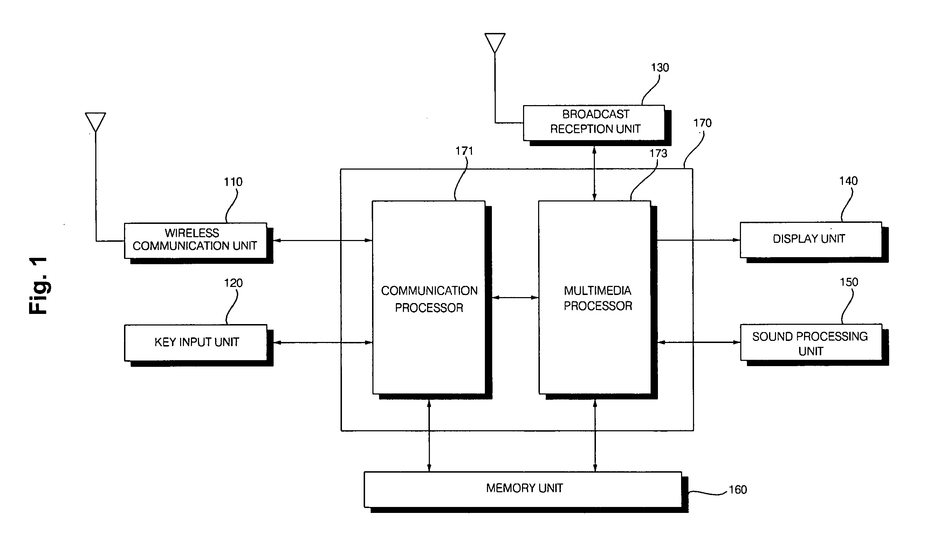

FIG. 1 is a block diagram of a broadcast receiver having a mobile communication function according to an embodiment of the present invention. As shown, the broadcast receiver includes a wireless communication unit 110, a key input unit 120, a broadcast reception unit 130, a display unit 140, a sound processing unit 150, a memory unit 160 and a control unit 170.

Further, the control unit 170 includes a communication processor 171 for controlling the communication functions of the broadcast receiver, and a multimedia processor 173 for controlling the broadcast processing functions of the broadcast receiver. Therefore, the broadcast receiver can separately execute a communication function and a broadcast processing function.

In addition, the wireless communication unit 110 provides an interface for wireless communication with a base station through an antenna, and includes a duplex filter for filtering a signal received through the antenna, a power amplifier for amplifying a transmit signal, a frequency up-convert circuit in a transmission path, a frequency down-convert circuit in a reception path, etc.

The broadcast receptionunit 13 0 receives a digital multimedia broadcast signal from a broadcast channel chosen by a user, generates a reproducible broadcast signal by performing a number of operations such as a demodulation operation on the digital multimedia broadcast signal, and outputs the reproducible broadcast signal to the control unit 170. The control unit 170 then displays a broadcast program in the broadcast signal on the display unit 140.

In addition, the key input unit 120 includes, for example, a plurality of keys such as number keys and function keys. The key input unit 120 also transmits a signal corresponding to a key selected by a user to the control unit 170 and thus receives an operation command and data from the user.

The display unit 140 includes, for example, a liquid crystal display (LCD) , and displays different menu options for controlling the broadcast receiver, information regarding a state of a received broadcast signal, battery information, and information regarding an operating state of the broadcast receiver that varies in response to a command input by the user, etc. As discussed above, the control unit 170 controls the display unit 140 to display the received broadcast program desired by the user.

Further, the sound processing unit 150 amplifies a sound signal output by the control unit 170 and outputs the amplified sound signal via speakers. In addition, the sound processing unit 150 also converts a sound signal input via a microphone into an electrical signal and transmits the electrical signal to the control unit 170.

In addition, the memory unit 160 includes, for example, a read only memory (ROM) , a random access memory (RAM) , or a flash memory. The memory unit 160 also stores programs and data used for operating the broadcast receiver and various other data that the user stores in the memory unit 160. Also, the control unit 170 controls the overall operation of the broadcast receiver by controlling the wireless communication unit 110, the key input unit 120, the broadcast reception unit 130, the display unit 140, the sound processing unit 150 and the memory unit 160.

More specifically, the control unit 170 receives a broadcast signal output by the broadcast reception unit 130 and reproduces the broadcast on the display unit 140. In addition, in one embodiment of the present invention, when the user requests a broadcast-related information enlargement mode using the key input unit 120, the control unit 170 searches the broadcast program being displayed on the display unit 14 0 for broadcast-related information. The control unit 170 then controls the display unit 140 to enlarge the broadcast-related information. The control unit 170 may also output an alarm or other signal to notify the user that identified broadcast-related information exists.

In other embodiments, the control unit 170 automatically executes the broadcast-related information enlargement mode when some information changes (e.g., a score of a game being broadcast) . Other embodiments are also possible and are discussed in more detail below.

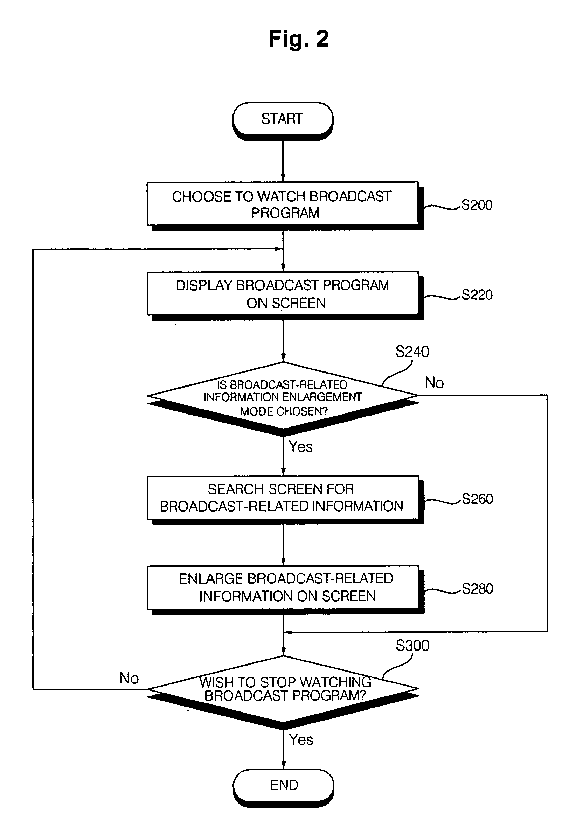

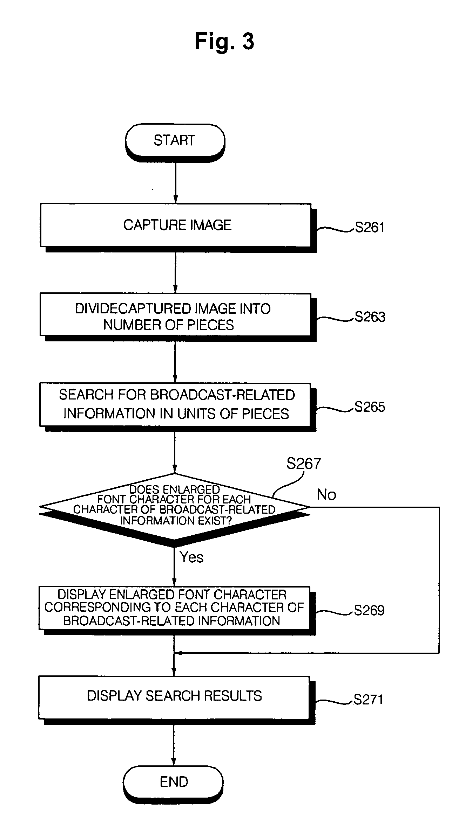

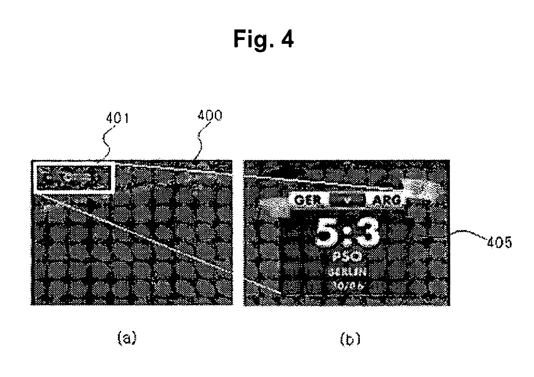

Next, FIGS. 2 and 3 are flowcharts illustrating a method of controlling a broadcast receiver according to an embodiment of the present invention, and FIG. 4 illustrates broadcast-related information being enlarged on the display unit 140.

Referring to FIG. 2, the user first selects a broadcast program they want to watch using keys provided on the key input unit 120 (S200). The user may also touch a particular broadcast among a plurality of displayed available broadcasts when the display unit 140 includes a touch screen. Then, the control unit 170 demodulates the broadcast program data provided by the broadcast reception unit 130 and controls the display unit 140 to display the broadcast program selected by the user (S220).

Further, while watching the broadcast program, the user can select a broadcast-related information enlargement mode using the keys on the key input unit 120 (S240). The user may also touch an enlargement mode soft key on the display unit 140 when the display unit 140 includes a touch screen. Then, the control unit 170 captures an image of the screen on the display unit 140 and searches the captured image for broadcast-related information such as text information (S260). Also, the multimedia processor 173 of the control unit 170 preferably performs the searching operation.

Thereafter, the control unit 170 enlarges the identified broadcast-related information on the screen using, for example, a popup window or a transparent window. In addition, if the identified broadcast-related information is text information, the control unit 170 may display the identified broadcast-related information using various fonts.

Referring to FIG. 2, the steps S220 through S280 may be repeatedly performed until the user wants to stop watching the chosen broadcast program (S300). In this manner, the broadcast-related information such as text information, which is not easily recognized on a small-sized screen, may be appropriately enlarged at the request of a user.

Next, FIG. 3 is a flowchart illustrating the searching operation described above with regards to step S260 in FIG. 2. Referring to FIG. 3, when the user selects the broadcast related information enlargement mode using the key input unit 120 or by touching a soft key on a touch screen, the control unit 170 captures an image of the screen (S261). Thereafter, the control unit 170 divides the captured image into a number of pieces (S263).

Further, because broadcast-related information is generally displayed at a corner position of the display screen, the control unit 170 searches the divided pieces of the broadcast-related information preferably starting with corner pieces (S265). In this manner, the control unit 170 can reduce the amount of time taken to search for the broadcast-related information. However, the searching operation may be performed using other various text recognition methods.

In addition,iftheidentified broadcast-relatedinformation is text information, the control unit 170 searches the memory unit 160 for an enlarged font character corresponding to each character of the text information (S267). Then, if the memory unit 160 includes an enlarged font character corresponding to each character of the text information (Yes in S267), the control unit 170 extracts the enlarged font characters from the memory unit 160 and displays the enlarged font character on the display unit 140, instead of directly enlarging each character of the text information on the screen (S269 and S271). Thus, the control unit 160 advantageously displays the enlarged text informationas beingnaturallydisplayed on the display unit 140.

Next, FIGS. 4 (a) and 4 (b) are overviews illustrating screen images displayed by the displayunit 140 under control of the control unit 140. More specifically, FIG. 4 (a) illustrates an image 400 displayed by the display unit 140 during the reproduction of a broadcast program. As shown in the upper left hand corner of the image 400 in FIG. 4 (a) , broadcast-related information 401 (e.g. , score information) is displayed.

Then, as shown in FIG. 4 (b) , when the user selects the broadcast-related enlargement mode, the control unit 170 detects the broadcast-related information 410 from the image 400 and then enlarges the broadcast-related information. Further, in the example shown in FIG. 4 (b) , the broadcast-related information 401 is displayed using a popup window 405. The enlarged information may also be displayed using a transparent window. Therefore, the user can easily recognize the broadcast-related information 410 even on a small-sized screen of the broadcast receiver.

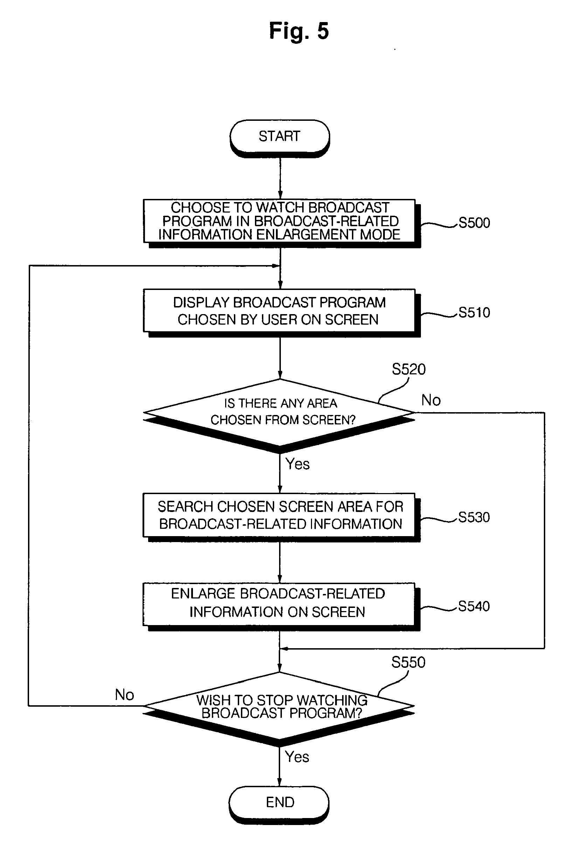

Next, FIG. 5 is a flowchart illustrating a method of controlling a broadcast receiver according to another embodiment of the present invention. FIG. 1 will also be referred to in this description.

Referring to FIG. 5, the user first chooses to view the broadcast program in a broadcast-related information enlargement mode (S500). In this mode, the control unit 170 receives demodulated broadcast program data from the broadcast reception unit 130 and displays the demodulated broadcast program data on a screen of the display unit 140 (S510).

The control unit 170 then determines if the user has selected any broadcast-related information on the screen (S520). For example, the user may use a menu option on the terminal or a side key to instruct the control unit 170 to capture an image of the screen, divide the captured image into a number of pieces, and then select one of the pieces using the key input unit 120. Alternatively, when the display unit 140 includes a touch screen, the user may choose the predetermined area on the screen by touching the touch screen.

Thereafter, the control unit 170 searches the chosen screen area for broadcast-related information (S530), and enlarges the broadcast-related information on the screen (S540). In addition, the steps S520 through 540 may be repeatedly performed until the user wishes to stop watching the broadcast program (S550).

Thus, in the embodiment of FIG. 5, the user can arbitrarily choose a screen area that includes broadcast-related information the use can hardly recognize or that the user wants enlarged, and have the broadcast-related information enlarged on the screen of the display unit 140. Therefore, the user can quickly recognize the broadcast-related information.

In addition, in an alternative embodiment, rather than performing steps S520 and S530 in FIG. 5, the control unit 170 can automatically enlarge the broadcast-related information whenever there is a change in the broadcast-related information. For example, when the broadcast-related information is a score of a game as shown in FIG. 4(a), the control unit 170 can automatically enlarge the information whenever the score changes. That is, the control unit 170 can monitor in real-time the broadcast-related information (e.g., the score) , and then enlarge the information whenever the broadcast-related information changes. The user can also turn on and off this option using the appropriate menu options provided with the broadcast receiver of the present invention. Further, the user can also select their favorite team and the control unit 170 then only enlarges the score when the user's favorite team's score changes.

In addition, the embodiment shown in FIGS. 4(a) and 4(b), the broadcast-related information is described as a score of a game. However, the broadcast-related information can also be a statistic related to a game being played on the broadcast program, information related to a character or actor performing on the broadcast program, information included in an Electronic Program Guide (EPG) corresponding to the broadcast program, map information concerning a location being shown in the broadcast program, and any other additional information included in a data stream corresponding to the broadcast program. That is, the broadcast program generally includes a corresponding data stream that includes a variety of text or data information related to the broadcast program. Thus, according to embodiments of the present invention, the control unit 170 can also enlarge any of this additional information based on the methods described above.

In addition, the present invention can be realized as computer-readable code written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, andacarrierwave (e.g., data transmission through the Internet). The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

As described above, according to embodiments of the present invention, it is possible to enlarge broadcast-related information on a screen of a broadcast receiver at the request of a user. In addition, according to embodiments of the present invention, it is possible for a user to choose a portion of a screen to be magnified. Therefore, it is possible for a user to easily recognize broadcast-related information even in various ways from a small-sized screen.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of controlling a broadcast receiver, the method comprising:
displaying a broadcast program on a screen of the broadcast receiver;
determining if a broadcast-related information enlargement mode is selected; and
enlarging the broadcast-related information on the screen of the broadcast receiver when the determining step determines the broadcast-related information enlargement mode is selected.

2. The method of claim 1, wherein the broadcast-related information includes at least a score of game being played in the broadcast program.

3. The method of claim 2, wherein the determining step determines the broadcast-related information enlargement mode has been selected whenever the score of the game changes such that the broadcast-related information is enlarged whenever the score changes.

4. The method of claim 2, further comprising:
selecting a team playing in the game being broadcast,
wherein the determining step determines the broadcast-related information enlargement mode has been selected only when the selected team's score changes such that the score of the game is enlarged only when the selected team' s score changes.

5. The method of claim 1, wherein the determining step determines the broadcast-related information enlargement mode has been selected when an enlargement mode key is selected on the broadcast receiver.

6. The method of claim 5, wherein the enlargement mode key comprises a soft key displayed on the screen that the user touches to select the broadcast-related information enlargement mode or a mechanical key that the user manipulates to select the broadcast-related information enlargement mode.

7. The method of claim 1, wherein the determining step determines the broadcast-related information enlargement mode has been selected when a portion of touch-screen containing the broadcast-related information is touched.

8. The method of claim 1, wherein the broadcast-related information includes at least one of a score or statistic related to a game being played on the broadcast program, information related to a character or actor performing on the broadcast program, information included in an Electronic Program Guide (EPG) corresponding to the broadcast program, map information concerning a location being shown in the broadcast program, and additional information included in a data stream corresponding to the broadcast program.

9. The method of claim 1, further comprising:
searching the screen for the broadcast-related information when the determining step determines the broadcast-related information enlargement mode is selected.

10. The method of claim 9, wherein the searching step comprises:
capturing an image of the screen;
dividing the captured image into a number of pieces; and
searching each of the pieces for the broadcast-related information.

11. The method of claim 1, wherein the broadcast-related information is text information.

12. The method of claim 1, further comprising:
outputting an alarm signal to indicate the broadcast-related information is available.

13. The method of claim 1, wherein the enlarging step comprises displaying the enlarged broadcast-related information using at least one of a popup window and a transparent window.

14. A broadcast receiving terminal, comprising:
a broadcast receiving unit configured to receive a broadcast program;
a display unit configured to display the broadcast program; and
a control unit configured to determine if a broadcast-related information enlargement mode is selected, and to control the display unit to enlarge the broadcast-related information displayed on the display unit when the broadcast-related information enlargement mode is selected.

15. The broadcast receiving terminal of claim 14, wherein the broadcast-related information includes at least a score of game being played in the broadcast program.

16. The broadcast receiving terminal of claim 15, wherein the control unit is further configured to determine the broadcast-related information enlargement mode has been selected whenever the score of the game changes such that the broadcast-related information is enlarged whenever the score changes.

17. The broadcast receiving terminal of claim 15, further comprising:
an input unit configured to select a team playing in the game being broadcast,
wherein the control unit is further configured to determine the broadcast-related information enlargement mode has been selected only when the selected team's score changes such that the score of the game is enlarged only when the selected team's score changes.

18. The broadcast receiving terminal of claim 14, further comprising:
an input unit including an enlargement mode key,
wherein the control unit is further configured to determine the broadcast-related information enlargement mode has been selected when an enlargement mode key is selected on the input unit.

19. The broadcast receiving terminal of claim 18, wherein the enlargement mode key comprises a soft key displayed on a touch-screen included in the display unit that the user touches to select the broadcast-related information enlargement mode or a mechanical key that the user manipulates to select the broadcast-related information enlargement mode.

20. The broadcast receiving terminal of claim 14, wherein the control unit is further configured to determine the broadcast-related information enlargement mode has been selected when a portion of a touch-screen of the display unit containing the broadcast-related information is touched.

21. The broadcast receiving terminal of claim 14, wherein the broadcast-related information includes at least one of a score or statistic related to a game beingplayed on the broadcast program, information related to a character or actor performing on the broadcast program, information included in an Electronic Program Guide (EPG) corresponding to the broadcast program, map information concerning a location being shown in the broadcast program, and additional information included in a data stream corresponding to the broadcast program.

22. The broadcast receiving terminal of claim 14, wherein the control unit is further configured to search the screen for the broadcast-related information when the broadcast-related information enlargement mode is selected.

23. The broadcast receiving terminal of claim 22, wherein the control unit is further configured to capture an image of the screen, to divide the captured image into a number of pieces, and to search each of the pieces for the broadcast-related information.

24. The broadcast receiving terminal of claim 14, wherein the control unit is further configured to output an alarm signal to indicate the broadcast-related information is available.

25. The broadcast receiving terminal of claim 14, wherein the control unit is further configured to control the display unit to display the enlarged broadcast-related information using at least one of a popup window and a transparent window.
